# EUROPEAN PATENT APPLICATION

(11) **EP 2 565 970 A1**
(43) Date of publication of application: **06.03.2013**
(21) Application number: 11179934.2
(22) Date of filing: 02.09.2011
(51) Int. Cl.: H01M 8/04

(54) **Fuel cell system comprising an ejector for recirculating off-gas from a stack**

(71) Applicant: Belenos Clean Power Holding AG, 2502 Bienne (CH)
(72) Inventor: The designation of the inventor has not yet been filed
(74) Representative: Couillard, Yann Luc Raymond

(57) **Abstract**

The fuel cell system includes:
- at least one fuel cell adapted to generate electrical energy from a fuel gas and an oxidizer gas;
- a fuel feed duct (11) provided for supplying the fuel cell with fuel gas, the fuel feed duct including an upstream part (11 A) and a downstream part (11B);
- a Venturi effect ejector (113) including a high pressure inlet (233), a low pressure inlet (238) and an outlet (240), the upstream part of the fuel feed duct being connected to the high pressure inlet of the ejector and the downstream part extending between the ejector outlet and the fuel cell;
- an off-gas recirculation duct (11 R) extending between the fuel cell and the low pressure ejector inlet (238) so that, in the presence of a stream of fuel gas coming from the upstream part of the fuel feed duct (11 A) and passing through the ejector (113), the ejector draws up off-gas from the recirculation duct and ejects it into the downstream part (11 B) mixed with the stream of fuel gas coming from the upstream part;
- a control circuit (15) and a valve (110) arranged in the upstream part (11A) of the fuel feed duct and arranged to be controlled by the control circuit, the valve being adapted to be placed in an open state, in which it lets the stream of fuel gas from the upstream part pass through the ejector (113), or in a closed state, in which no stream of gas from the upstream part can flow through the ejector.

characterized in that said control circuit (15) is arranged to place the valve alternately in the open state and then the closed state, so that the stream of fuel gas passing through the ejector (113) is intermittent, being frequency and/or pulse width modulated by the control circuit.

## Description

### FIELD OF THE INVENTION

The present invention concerns a fuel cell system comprising at least one ejector for recirculating off-gas from a fuel cell stack. More specifically, the present invention concerns such a fuel cell system in which the fuel supply means are designed in such a way as to widen the operating range of the ejector. The invention more particularly concerns such a fuel cell system using hydrogen as fuel and pure oxygen as oxidizer, and comprising at least one ejector for recirculating unreacted hydrogen and at least one ejector for recirculating unreacted oxygen.

### BACKGROUND OF THE INVENTION

Electrochemical fuel cells of the above-mentioned type convert a stream of fuel gas and a stream of oxidizer gas, hydrogen and oxygen-containing air for example, into electric power and water. Proton exchange membrane fuel cells (PEMFC) generally comprise a solid polymer electrolyte membrane disposed between two porous electrically conductive electrode layers so as to form a membrane electrode assembly (MEA). In order to induce the desired electrochemical reaction, the anode electrode and the cathode electrode each comprise one or more catalyst. These catalysts are typically disposed at the membrane/electrode layer interface.

At the anode, the hydrogen moves through the porous electrode layer and is oxidized by the catalyst to produce protons and electrons. The protons migrate through the solid polymer electrolyte towards the cathode. The oxygen, for its part, moves through the porous cathode and reacts with the protons coming through the membrane at the cathode electrocatalyst. The electrons travel from the anode to the cathode through an external circuit, producing an electric current.

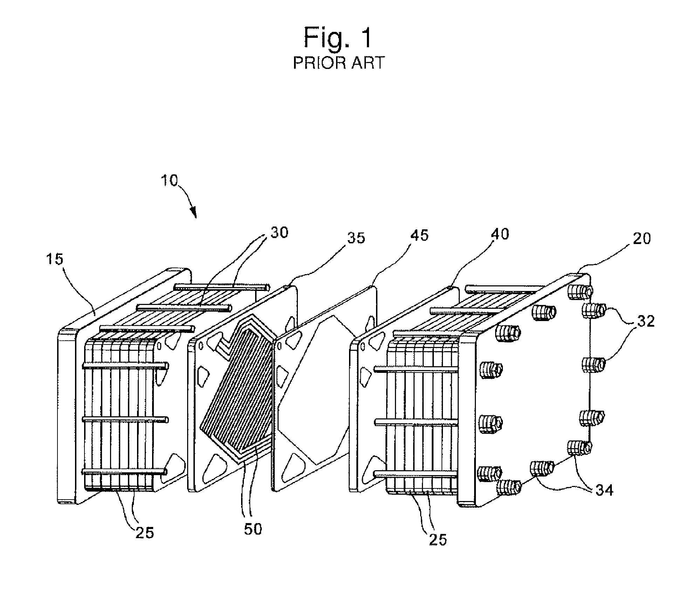

Figure 1 illustrates, in exploded view, a prior art proton exchange membrane fuel cell stack 10. Stack 10 includes a pair of end plate assemblies 15, 20 and a plurality of fuel cell assemblies 25. In this particular example, electrically insulating tie rods 30 extend between end plate assemblies 15, 20 to retain and secure stack assembly 10 in its assembled state with fastening nuts 32. Springs 34 threaded on tie rods 30 interposed between fastening nuts 32 and end plate 20 apply resilient compressive force to stack 10 in the longitudinal direction. Reactant and coolant fluid streams are supplied to, and exhausted from, internal manifolds and passages in stack 10 via inlet and outlet ports (not shown) in end plate 15.

Each fuel cell assembly 25 includes an anode flow field plate 35, a cathode flow field plate 40 and an MEA 45 interposed between plates 35 and 40. Anode and cathode flow field plates 35 and 40 are made out of an electrically conductive material and act as current collectors. As the anode flow field plate of one cell sits back to back with the cathode flow field plate of the neighboring cell, electric current can flow from one cell to the other and thus through the entire stack 10. Other prior art fuel cell stacks are known in which individual cells are separated by a single bipolar flow field plate instead of by separate anode and cathode flow field plates.

Flow field plates 35 and 40 further provide a fluid barrier between adjacent fuel cell assemblies so as to keep reactant fluid supplied to the anode of one cell from contaminating reactant fluid supplied to the cathode of another cell. At the interface between MEA 45 and plates 35 and 40, fluid flow fields 50 direct the reactant fluids to the electrodes. Fluid flow field 50 typically comprises a plurality of fluid flow channels formed in the major surfaces of plates 35 and 40 facing MEA 45. One purpose of fluid flow field 50 is to distribute the reactant fluid to the entire surface of the respective electrodes, namely the anode on the fuel side and the cathode on the oxidizer side.

The fuel gas and the oxidizer gas are driven along the flow channels of respective flow fields 50 by a pressure differential. Therefore, in most cases, it is necessary to pressurize the reactant gases entering the stack 10 in order that the reactants flow from the inlets to the outlets through all the fuel cells. Furthermore, during operation of the stack, water formed on the cathode side of the fuel cells can condense and accumulate in the channels adjacent the cathode. In such a situation, water droplets gradually coalesce and form larger droplets, partially obstructing channels. If nothing is done, portions of the MEA will ultimately cease to be supplied with reactant gas and will become inactive.

On will understand from the above, that it is important that the differential pressure between inlet and outlet of the fuel cells be enough, both to drive the reactant gases through the flow field structure, and to force stagnant water out of the flow channels so as to clear them. It follows that, in order to maintain a sufficient pressure drop, it is necessary that the flow of reactant gases be large enough. This is the main reason why fuel and oxidizer gases are usually supplied to the fuel cells in an amount larger than the amount required for the electrochemical reaction.

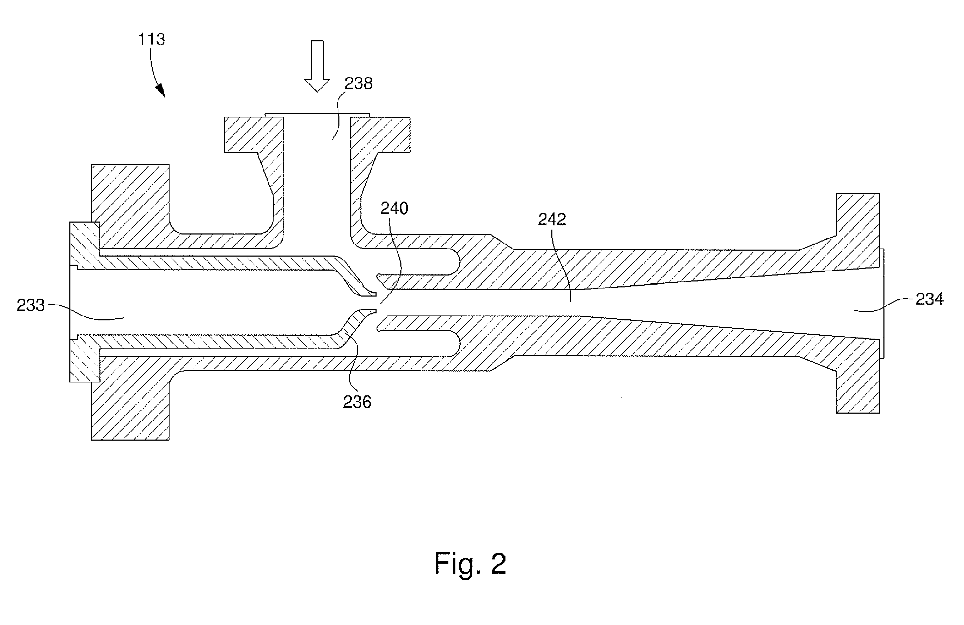

In order to conserve costly fuel and thus to improve the overall efficiency of the system, the off-gas from the fuel cell stack is usually recirculated. In other words, the off-gas discharged from the anode side of the fuel cells is first guided through a gas/water separator and then pumped and mixed with fresh fuel gas to be supplied to the fuel cells. It is known to pump the off-gas by means of an ejector vacuum pump (such an ejector pump is shown in Figure 2). An advantage of using ejector pumps is that, as ejector pumps operate based on the Venturi effect, they have a simpler structure than electromechanical pumps and they do not require any lubrication since they do not comprise any mobile parts. A drawback with ejector vacuum pumps is that they have a narrow operation range. This can be a problem in the case of automotive applications, where the rate of fuel and oxidizer consumption can vary considerably.

In order the cope with abrupt changes in load while maintaining the fuel cell system in the desired narrow operation range, an electrochemical energy storage unit, such as a battery or a super capacitor, is usually associated with the fuel cell stack. The battery can work as a buffer: supplying electric power when there is a peak in the load and, conversely, storing excess electric power in case of low or zero load conditions. In principle, such an arrangement allows operating the fuel cell in the narrow operation range compatible with an ejector vacuum pump. However, once the battery is completely charged, it obviously ceases to be available for storing the excess electric power supplied by the fuel cell. A known solution to this last problem is simply to shut down the fuel cell until the level of charge of the battery reaches a lower threshold. However, this solution tends to be hard on the battery. Furthermore, start-stop cycles are known to contribute to the degradation of performance over time.

PCT patent application W02009/144118 discloses how to operate a fuel cell system, supplied with hydrogen and oxygen gas, in a way that gives it an operation range wide enough to cope with large changes in load; even when no battery is available for storing excess electric power. The method is founded on the notion that, in a fuel cell stack, the fuel and oxidizer gases are consumed in direct proportion to the electrical current drawn from the stack. Accordingly, this prior art method for operating a fuel cell system comprises the steps of:
- supplying a stream of substantially pure hydrogen to the anodes of the fuel cells;
- supplying an stream of substantially pure oxygen to the cathodes of the fuel cells;
- monitoring an output voltage of the fuel cell stack;
- continuously adjusting the stream of hydrogen and the stream of oxygen in such a way as to bring and maintain the output voltage at a level corresponding to less than .90 volts/cell.

To summarize, the method disclosed in this prior art document teaches that it is possible to maintain the output voltage of a fuel cell stack substantially constant by adapting the fuel and oxidizer mass flow rates when there is a change in the connected load. More specifically, according to this prior document it possible to keep the output voltage below a predetermined maximum limit of .90 volts or less, by limiting the mass flow of hydrogen and of oxygen supplied to the fuel cell stack.

One limitations associated with this method of regulating the output power of a fuel cell stack by controlling the pressure, is that it is not practical to use the ambient air as the supply of oxidizer gas. Indeed, in order to have a wide operation range, it is preferable to have the possibility to reduce the pressure of the oxidizer gas, as well as the pressure of the fuel gas, to below .7 bar_{absolute}. This is more readily achieved when the oxidizer gas is supplied from a tank containing pure oxygen, than when the oxidizer gas is air containing only about 20% of oxygen. It is therefore preferable to use pure oxygen. However, bottled oxygen is costly. Therefore, W02009/144118 provides that the off-gases discharged from both the anode side and the cathode side of the fuel cells is recirculated.

As already explained, even conventional fuel cell systems for automotive applications often tend to have an operation range that is too wide for conventional ejector pumps. Furthermore, one will understand that this problem is even more acute in the case of fuel cell systems operating according to the method disclosed in the above-mentioned prior art document. To be more precise, in the latter case, the flow of reactant gases to the fuel cell stack is often not intense enough to produce the Venturi effect that ejector vacuum pumps rely on in order to operate. For this reason, the above-mentioned prior art document teaches that a controllable auxiliary hydrogen pump is provided for supplementing the hydrogen ejector pump, and that a controllable auxiliary oxygen pump is provided for supplementing the oxygen ejector pump. A problem with this arrangement is that controllable pumps are much more complicated than ejector pumps. Furthermore, the controllable pumps use some of the electrical energy produced by the stack in order to operate. This reduces the global efficiency of the system.

### SUMMARY OF THE INVENTION

It is an object of the present invention to provide a fuel cell system comprising at least one ejector vacuum pump arranged for recirculating anode off-gas, and in which the fuel supply means are designed in such a way as to widen the operating range of the ejector vacuum pump. To this end, it provides a fuel cell system as defined in the annexed claim 1.

One will understand that according to the invention, the mass flow rate of the fuel gas supplied to the fuel cell is controlled by frequency modulation and/or by pulse width modulation of the stream of fuel gas. According to a first implementation, the control circuit can increase or decrease the mass flow rate by changing the pulse width accordingly, while maintaining the frequency constant. Alternatively, according to a second implementation, the control circuit can also increase or decrease the mass flow rate by changing the frequency accordingly, while maintaining the pulse width constant. According to a preferred implementation, the control circuit increases the mass flow rate by increasing both the frequency and the pulse width, and decreases the mass flow rate by decreasing both the frequency and the mass flow rate. Once the control circuit and the valve have reached their maximum operating frequency, it is still possible to further increase the mass flow rate by having the control circuit continuously maintain the valve in the open state.

One advantage of the present invention is that it allows limiting the mass flow rate of the fuel gas supplied to the fuel cell stack without limiting the intensity of the stream of fuel gas passing through the ejector at the times when the valve is in the open state. In other words, the invention allows limiting the mass flow rate of the fuel gas passing through the ejector, while at the same time, maintaining a flow of fuel gas intense enough to produce the Venturi effect that the ejector vacuum pump needs in order to operate. One will understand that this advantage amounts to widening the operating range of the ejector.

Advantageous embodiments of the fuel cell system of the present invention form the subject matter of the dependent claims. According to one of these embodiments, the valve and the ejector form an integral part. One advantage of this feature is that it allows the invention to be implemented without making the system more complex. Indeed, the fuel cell system does not need to be any more complex compared to a system with ejection means that is not controlled by frequency and pulse width modulation, since the valve may be directly integrated in the ejector. Hence, no alteration to the fuel feed duct is necessary.

### BRIEF DESCRIPTION OF THE DRAWINGS

Other features and advantages of the present invention will appear upon reading the following description, given solely by way of non-limiting example with reference to the annexed drawings, in which:
- figure 1 is an exploded view of a conventional fuel cell stack (prior art);
- figure 2 shows a schematic cross-section of a known ejector vacuum pump;
- figure 3 is a graph showing a compute simulation of the pressure variation over time of the supply-gas entering the fuel cell stack (dotted line), and of the off-gas exiting the fuel cell stack (solid line);
- figure 4 is schematic representation of the power train of an automobile vehicle, the power train comprising an electric energy production system comprising a fuel cell system according to a first embodiment of the invention;
- figure 5 is a schematic representation of part of a fuel cell system according to a second embodiment of the present invention.

### DETAILED DESCRIPTION OF THE INVENTION

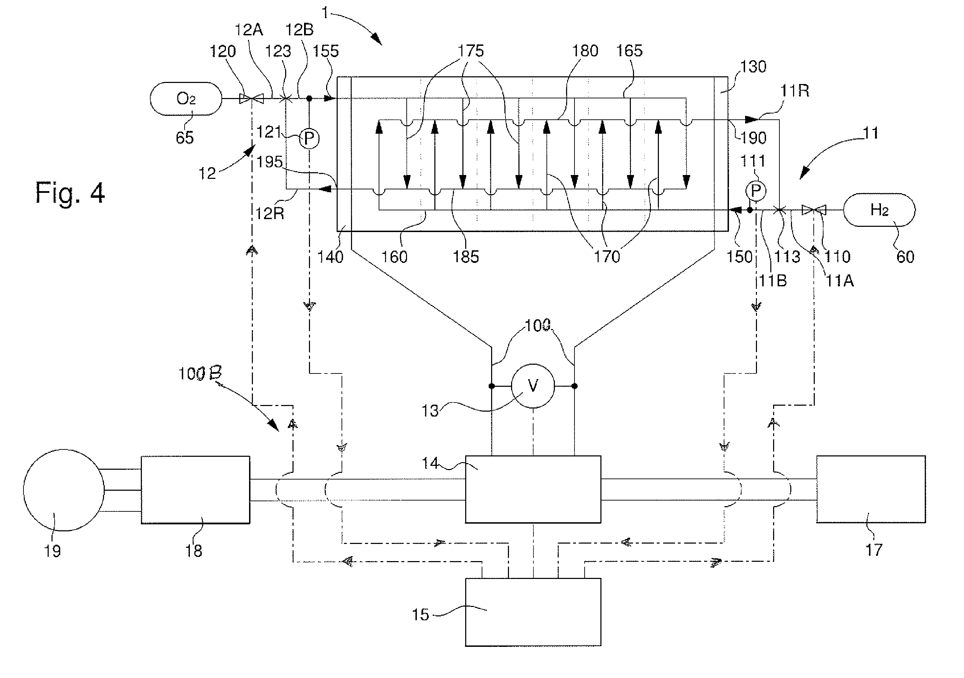

The fuel cell stack 1 of the fuel cell system illustrated in Figure 4 is of a type designed to use hydrogen as fuel and pure oxygen as oxidizer. It includes end plates 130, 140, a hydrogen inlet port 150 in end plate 130 and an oxygen inlet port 155 in end plate 140. Stack 1 further includes a hydrogen supply manifold 160 and an oxygen supply manifold 165 respectively for supplying a stream of hydrogen and a stream of oxygen to a plurality of individual fuel cells.

Hydrogen and oxygen flow fields associated with each fuel cell are represented by lines 170 and 175. A hydrogen exhaust manifold 180 and an oxygen exhaust manifold 185 remove the depleted reactants and the reaction products from the stack through a hydrogen outlet port 190 and an oxygen outlet port 195.

As illustrated, the fuel cell system comprises a pressurized hydrogen storage vessel 60 connected the hydrogen inlet 150 of the stack by means of a fuel feed duct 11 equipped with a first valve 110 and an ejector pump 113. A hydrogen pressure sensor 111 is arranged on the fuel feed duct near the hydrogen inlet 150 so as to measure the pressure of the hydrogen supplied to the fuel cell stack 1. A first off-gas recirculation duct 11 R connects outlet port 190 of the stack to the first Venturi effect ejector 113, downstream of the first valve 110. The ejector pump 113 provides for recirculating the leftover hydrogen and for mixing it with fresh hydrogen.

In a similar way, the fuel cell system comprises a pressurized oxygen storage vessel 65 connected the oxygen inlet 155 of the stack by means of an oxidizer feed duct 12 equipped with a second valve 120 and an ejector pump 123. An oxygen pressure sensor 121 is arranged on the oxidizer feed duct near the oxygen inlet 155 so as to measure the pressure of the oxygen supplied to the fuel cell stack 1. An second off-gas recirculation duct 12R connects outlet port 195 of the stack to the second Venturi effect ejector 123, downstream of supply valve 120. The ejector pump 123 provides for recirculating and for mixing the used oxygen with fresh oxygen.

The fuel cell system further comprises moisture management means (not shown). As product water is formed on the cathode side of the fuel cells by the combination of hydrogen and oxygen ions, the product water must be drawn away from the cathode side of the fuel cells. In particular, in order to avoid flooding, the moisture management means usually comprise a gas-liquid separator arranged on the second off-gas recirculation duct 12R. Another gas-liquid separator is preferably also arranged on the first off-gas recirculation duct 11 R for separating liquid water from the exhausted hydrogen. At the same time, moisture must be provided to both the anode and the cathode side of the cells in amounts that will prevent the membrane drying out.

The stack 1 is connected to an electric power line 100 to which it delivers the electricity it generates. An electric load 100B is connected to power line 100. The current from the stack is delivered to a power management unit 14. Unit 14 is connected on the one hand to an electric traction module for an automobile vehicle, which consists essentially of a DC/AC converter 18 and an electric machine 19 mechanically coupled to a drive wheel or drive wheels (not shown) of the automobile vehicle. Unit 14 is also connected to an electrical energy storage device, preferably a Li-Ion battery pack or a Supercapacitor pack 17. In the illustrated example, a power management unit 14 is arranged between the stack 1 and the electrical energy storage device 17. However, it will be understood that alternatively the stack could be connected directly to the energy storage device.

Accordingly, the stack 1 can supply electricity to the electric traction module 18, 19 or to the battery pack 17, or both. The battery pack can receive electrical energy and store it, or it can deliver electrical energy to the electric traction module 18, 19. As regards the latter, since the electric machine 19 is reversible, it can both consume electric energy, while propelling the vehicle, and generate electricity for charging the battery pack 17, while in the electric braking mode of the vehicle. The electric power management unit 14 regulates the circulation of power as a function of the position of an accelerator pedal of the vehicle (not shown) and as a function of conditions prevailing in the electricity supply system.

The fuel cell stack 1 is controlled by a control circuit 15. Control circuit 15 receives information from the hydrogen pressure sensor 111 and the oxygen pressure sensor 121, as well as from a voltage measuring device 13 via the power management unit 14. According to the illustrated example, the voltage measuring device 13 measures the output voltage from the fuel cell stack 1 as a whole. Thus the measured output voltage amounts the sum of the contributions from all the individual fuel cells in the stack. However, it is also possible to measure the output voltages of the individual cells separately, or else to divide the individual cells of the stack into several groups, each having an output voltage. The control circuit 15 controls the pressure of both the hydrogen and the oxygen supplied to the fuel cell stack by intermittently opening and closing the first and second valves (110, 120) so as to modulate both the flow of fuel gas passing through the first ejector (113), and the flow of oxidizer gas passing through the second ejector (123).

The process that allows control circuit 15 to control the reactant pressure in the fuel cells will now be explained in more detail. The reactants are consumed in the fuel cells at a rate corresponding to the amount of electric power supplied by the stack 1 to the connected load. One will therefore understand that if, in the absence of a change of load, the control circuit 15 increases the hydrogen mass flow rate, the amount of hydrogen available in the fuel cells increases and eventually exceeds the amount hydrogen consumed by the fuel cells. This causes the pressure at the anode of the fuel cells to increase also. In contrast, if the control circuit 15 decreases the hydrogen mass flow rate, the amount of hydrogen available in the fuel cells decreases and ceases to be enough to compensate for the amount of hydrogen consumed in the fuel cells. This causes the pressure at the anode of the fuel cells to decrease. One will further understand that the same type of relation governs the effect of an increase, or of a decrease, in the oxygen mass flow rate on the pressure at the cathode fuel cells. As previously mentioned, according to the presently described embodiment of the invention, the hydrogen and the oxygen supplied to the fuel cells are substantially pure hydrogen and substantially pure oxygen respectively. This feature allows the hydrogen and the oxygen present in the fuel cell to be almost entirely consumed. It is thus possible for the pressure at the cathode and at the anode of the fuel cell to decrease far bellow the external atmospheric pressure. All the way down to vapor pressure actually. control circuit 15 modulates the frequency and/or pulse width of either the stream of fuel gas or the stream of oxidizer gas. modulates the frequency and/or pulse width of either the stream of fuel gas or the stream of oxidizer gas, so as

Figure 2 is a schematic view of an examplary Venturi effect ejector that may, for instance, correspond to either one of the vacuum ejectors 113, 123 of figure 4. As can be seen in figure 2, the ejector comprises a high pressure inlet 233, a low pressure inlet 238, and an outlet 234. Referring now to figure 4 as well as figure 2, one will understand that, in the case of ejector 113, its high pressure inlet 233 is connected to the upstream part 11 A of the fuel feed duct, while its outlet 234 is connected to the downstream part 11B of the fuel feed duct, extending from the ejector outlet to the anode side of the fuel cell stack. Finally, the low pressure inlet 238 receives the off-gas recirculation duct 11 R, for collecting the off-gas from the anode side of the fuel cell stack.

When a stream of fuel gas coming from the upstream part of the fuel feed duct enters the ejector, it first passes through a converging nozzle 236 before entering a mixing chamber 240. The shape of the nozzle causes the speed of the stream of fuel gas to increase. As its speed increases, the stream of fuel gas is progressively converted into a high velocity jet that enters the mixing chamber 240. Inside the chamber, the Venturi effect creates a low pressure. As the off-gas recirculation duct 11R is connected by one end to the mixing chamber, the low pressure in the chamber causes a suction effect that draws up the gas present in the recirculation duct. This in turn causes the pressure inside the duct to be reduced as well. One will therefore understand, that in the presence of a stream of fuel gas from the upstream part 11A passing through the ejector 113, the Venturi effect will maintain a high pressure difference between the high and the low pressure inlets of the ejector. This pressure difference generates a pressure drop between the inlets and the outlets of the fuel cells. It is this pressure drop, or differential pressure, that drives the fuel gas through the flow field structures of the fuel cells and forces stagnant water out of the flow channels. In this way, the off-gas from the anode side of the fuel cell stack is caused to flow through the off-gas recirculation duct 11 R and to reenter the mixing chamber 240. The high velocity jet in the chamber ejects the off-gas into the diffuser throat 242 where it mixes with the fresh fuel gas. As the diameter of the diffuser throat progressively widens, the pressure of the gas flowing along the diffuser gradually increases as its speed decreases. The stream of mixed fuel gas finally leaves the ejector 113 through the outlet 234.

As previously explained, product water is formed in the fuel cells by the combination of hydrogen and oxygen ions, the product water must be drawn away mainly from the cathode side of the fuel cells. To this end, the fuel cell system of the present invention preferably comprises a gas-liquid separator (not shown) arranged somewhere along each of the first and second off-gas recirculation ducts 11 R, 12R. In this way, liquid water droplets are prevented from reentering the stack. Only humidity in the form of vapour can mix with the supply gas and be reinjected into the fuel cells.

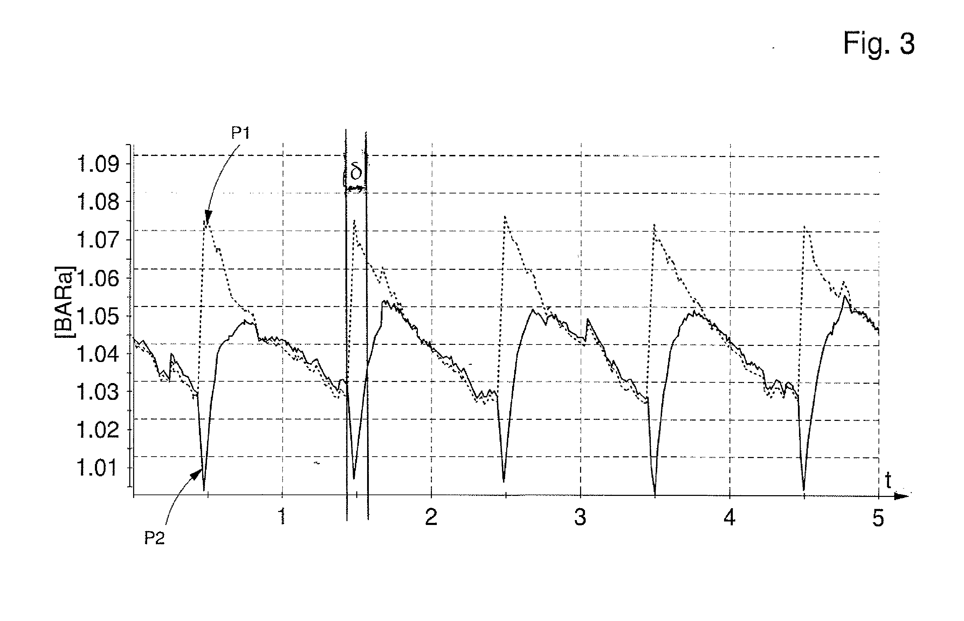

As previously stated, according to the invention, the valves 110 and 120 are operated in a pulsed manner, in other words, they are alternatively switched by control circuit 15 between an open state and a closed state. The dotted line in figure 3 shows variations over time of the pressure measured by one of the pressure sensors 111 or 121. The solid line in figure 3 shows the pressure in the corresponding recirculation duct (11 R or 12R respectively). In the illustrated example, the cycle time of the modulation of the supply valves is equal to 1 (in arbitrary units). It follows that the modulation frequency is also equal to 1. The pulse width is equal to δ and each pulse of supply gas is centred in the middle of the cycle (½, 1½_{,} 2½, etc.)

When the valves are in the closed state, no supply gas can enter the high pressure inlet 233 of the ejector. In this case, the Venturi effect can not take place inside the ejector. It follows that, as shown in figure 3, the pressure in the recirculation duct (solid line) is substantially equal to the pressure at the entrance to the fuel cell stack (dotted line). One will understand that, as there is no pressure drop, the reactant gas does not flow through the fuel cells. However, as illustrated by the downward slope of the curves in figure 3, the pressure inside the fuel cells gradually decreases as the hydrogen and the oxygen that has accumulated in the fuel cells is consumed.

Near the middle of each cycle, the valves 110, 120 suddenly switch to the open state and remain in the open state for a brief moment, the duration of which is equal to δ. During the time when the valves are in the open state, a stream of reactant gas flows trough the high pressure inlet 233 of the ejector. At this instant, the mass flow rate of the stream of reactant gas is equal to the maximum rate accepted by the ejector. Therefore, as shown in figure 3, the pressure of the stream of gas entering the fuel cell stack (dotted line) rapidly rises, while the pressure in the recirculation duct (solid line) rapidly falls. Accordingly, the pressure differential between the inlets and the outlets of the fuel cells rapidly approaches its maximum value. The pressure differential becomes large enough both to drive the reactant gases through the fuel cells, and to force stagnant water out of the flow channels so as to clear them.

When the valves switch back into the closed state, the pressures in the high pressure inlet 233 and the low pressure inlet 238 rapidly equalize. One will understand from the above that the average mass flow rate of the stream of reactant gas fed to the fuel cell stack can be modulated either by changing the frequency (or in other words the cycle time) or by changing the pulse width (δ). Naturally the frequency and the pulse width can also be changed simultaneously.

In the presently described embodiment, the valves 110, 120 regularly switch with a constant and relatively low frequency. It is the pulse width that is modulated. Preferably, the value of the frequency is comprised in the range between 0 and 20 Hertz. Furthermore, the value of the pulse width is at least 2.5ms. Indeed, on the one hand, a minimum pulse width is needed in order to create a sufficient pressure differential between the inlets and the outlets of the fuel cells. On the other hand, the low pulse width guarantees that the pressure remains in the desired range since, when the valve opens, the pressure will not have time increase very much.

The frequency and pulse width modulation of valves 110 and 120 allows the ejector to operate in the entire operating range of the fuel cell system. Furthermore, in this first described embodiment, the size of the ejectors and the size of the valves are chosen so that the fuel cell system is supplied with enough reactants to operate at maximum power when the valves 110 and 120 are permanently kept in the open state.

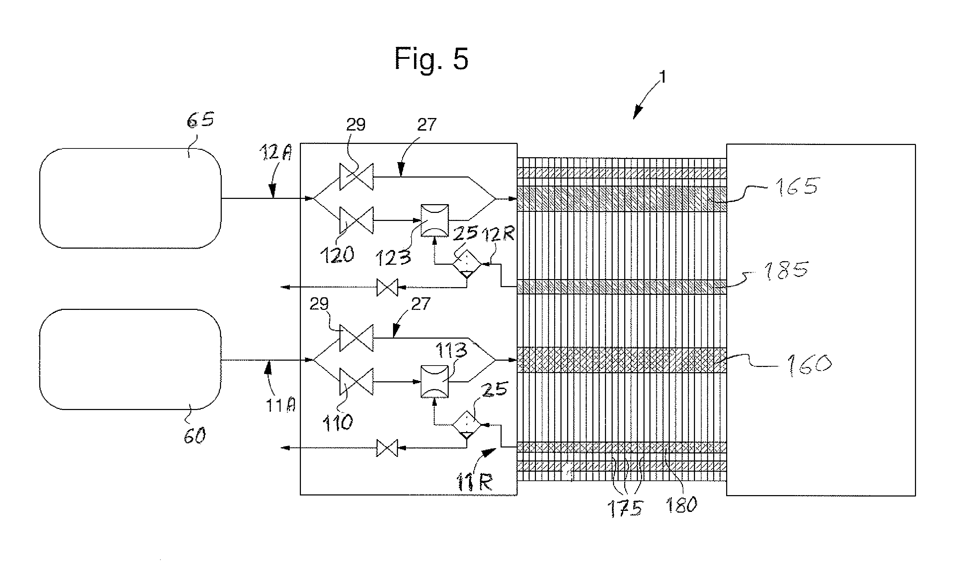

Figure 5 shows as second embodiment of a fuel cell system according to the invention. In this second embodiment, the fuel feed duct 11 and the oxidizer feed duct 12 each comprise a bypass line in the form of an additional parallel duct 27. On the upstream side, each bypass lines 27 is connected to the corresponding reactant feed duct (11 or 12) upstream of the intermittent valve 110 or 120. On the downstream side, each bypass line is connected to the corresponding reactant feed duct downstream of the ejector 113 or 123. The bypass lines each include a control valve 29 of the on/off type. This control valve can be controlled by a control circuit 15 (not shown in figure 5). However, it is not intended to be frequency modulated or pulse width modulated.

When the fuel cell stack is operating in low power mode, the required reactant mass flow is relatively low. Therefore, valve 29 of parallel duct 27 is closed and the entire stream of reactant gas passes through the ejector 113 or 123. When the cell stack shifts into high power operating mode, the required reactant mass flow soon surpasses what the ejector is capable of delivering. In this case, valve 29 opens, and an additional stream of reactant gas starts to flow through each of the bypass lines.

It will be clear that various alterations and/or improvements and/or combinations evident to those skilled in the art may be made to the various embodiments of the invention set out above without departing from the scope of the invention defined by the annexed claims.

## Claims

1. A fuel cell system including:
- at least one fuel cell adapted to generate electrical energy from a fuel gas and an oxidizer gas;
- a fuel feed duct (11) provided for supplying the fuel cell with fuel gas, the fuel feed duct including an upstream part (11 A) and a downstream part (11B);
- a Venturi effect ejector (113) including a high pressure inlet (233), a low pressure inlet (238) and an outlet (240), the upstream part of the fuel feed duct being connected to the high pressure inlet of the ejector and the downstream part extending between the ejector outlet and the fuel cell;
- an off-gas recirculation duct (11 R) extending between the fuel cell and the low pressure ejector inlet (238) so that, in the presence of a stream of fuel gas coming from the upstream part of the fuel feed duct (11 A) and passing through the ejector (113), the ejector draws up off-gas from the recirculation duct and ejects it into the downstream part (11 B) mixed with the stream of fuel gas coming from the upstream part;
- a control circuit (15) and a valve (110) arranged in the upstream part (11A) of the fuel feed duct and arranged to be controlled by the control circuit, the valve being adapted to be placed in an open state, in which it lets the stream of fuel gas from the upstream part pass through the ejector (113), or in a closed state, in which no stream of gas from the upstream part can flow through the ejector.
**characterized in that** said control circuit (15) is arranged to place the valve alternately in the open state and then the closed state, so that the stream of fuel gas passing through the ejector (113) is intermittent, being frequency and/or pulse width modulated by the control circuit.

2. The fuel cell system of claim 1, wherein it further includes:
- an oxidizer feed duct (12) provided for supplying the fuel cell with oxidizer gas, the oxidizer feed duct including an upstream part (12A) and a downstream part (12);
- a first (113) and a second Venturi effect ejector (123), the first and the second Venturi effect ejectors each including a high pressure inlet (233), a low pressure inlet (238) and an outlet (234), the upstream part of the fuel feed duct (11 A) being connected to the high pressure inlet of the first ejector (113) and the downstream part of the fuel feed duct (11 B) extending between the outlet (234) of the first elector and an anode side of the fuel cell, the upstream part (12A) of the oxidizer feed duct being connected to the high pressure inlet (233) of the second ejector (123) and the downstream part (12B) of the oxidizer feed duct extending between the second ejector outlet (234) and a cathode side of the fuel cell;
- a first (11R) and a second (12R) off-gas recirculation duct, the first off-gas recirculation duct (11 R) extending between the anode side of the fuel cell and the low pressure inlet (238) of the first ejector (113), and the second off-gas recirculation duct (12R) extending between a cathode side of the fuel cell and the low pressure inlet (238) of the second ejector (123), so that, in the presence of a stream of fuel gas coming from the upstream part (11 a) of the fuel feed duct and passing through the first ejector (113), the first ejector draws up off-gas from the first recirculation duct (11 R) and ejects it into the downstream part (11 B) of the fuel feed duct mixed with the stream of fuel gas, and so that, in the presence of a stream of oxidizer gas coming from the upstream part (12A) of the oxidizer feed duct and passing through the second ejector (123), the second ejector draws up off-gas from the second recirculation duct (12R) and ejects it into the downstream part (12B) of the oxidizer feed duct mixed with the stream of oxidizer gas;
- a first (110) and a second valve (120) arranged in the upstream parts of the fuel and oxidizer feed ducts respectively, the first and the second valves being arranged to be controlled by the control circuit (15), and being adapted to be placed in an open state, in which they let the stream of fuel gas and the stream of oxidizer gas from the upstream parts pass through the first (113) and the second ejectors (123) respectively, or in a closed state, in which no gas flux from the upstream part of the fuel feed duct or of the oxidizer feed duct can pass through the corresponding ejector;
wherein the control circuit (15) is arranged to place the first valve (110) alternately in the open state and then the closed state, so that the stream of fuel gas passing through the first ejector (113) is intermittent, being frequency and/or pulse width modulated by the control circuit, and wherein the control circuit (15) is arranged to place the second valve (120) alternately in the open state and then the closed state, so that the stream of oxidizer gas passing through the second ejector (123) is intermittent, being frequency and/or pulse width modulated by the control circuit.

3. The fuel cell system of claim 2, wherein the first valve and the first ejector form a single part and/or the second valve and the second ejector form a single part.

4. The fuel cell system of claim 2 or 3, wherein the opening of the first valve and/or the second valve is controlled such that the frequency and pulse width increase when the power increases and vice versa.

5. The fuel cell system of any one of the preceding claims, **characterized in that** the fuel feed duct and/or the oxidant feed duct further include a bypass circuit for increasing the supply of fuel and/or oxidant.

6. The fuel cell system of claim 5, **characterized in that** the bypass circuit includes a parallel pipe mounted in parallel to the first feed circuit and including a bypass valve that opens or closes said bypass circuit.

7. The fuel cell system of claim 6, **characterized in that** the valve of the parallel pipe is arranged to open when the main valve of the ejection means is permanently open.
